(19) Europäisches Patentamt
European Patent Office
Office européen des brevets

(11) EP 0 648 236 B1

# (12) FASCICULE DE BREVET EUROPEEN

(45) Date de publication et mention de la délivrance du brevet: **02.05.1997 Bulletin 1997/18**

(21) Numéro de dépôt: **93913183.5**

(22) Date de dépôt: **24.06.1993**

(51) Int Cl.$^6$: **C08G 18/46**, C08L 75/06, C08G 18/67

(86) Numéro de dépôt international: **PCT/FR93/00630**

(87) Numéro de publication internationale: **WO 94/00503 (06.01.1994 Gazette 1994/02)**

(54) **RESINES ET COMPOSITIONS POUR LA FABRICATION DE MATERIAUX DE HAUT MODULE RESISTANTS A LA CHALEUR ET ARTICLES MOULES OBTENUS A PARTIR DE CES MATERIAUX**

HARZE UND ZUSAMMENSETZUNGEN ZUR HERSTELLUNG VON WÄRMEBESTÄNDIGEN, HOHES MODUL AUFWEISENDEN GEGENSTÄNDEN UND DARAUS HERGESTELLTE FORMTEILE

RESINS AND COMPOSITIONS FOR THE MANUFACTURE OF HIGH MODULUS HEAT-RESISTANT MATERIALS AND MOULDED ARTICLES PRODUCED FROM SUCH MATERIALS

(84) Etats contractants désignés: **AT BE CH DE DK ES FR GB GR IE IT LI LU MC NL PT SE**

(30) Priorité: **26.06.1992 FR 9207879**

(43) Date de publication de la demande: **19.04.1995 Bulletin 1995/16**

(73) Titulaire: **CRAY VALLEY SA**
**F-92800 Puteaux (FR)**

(72) Inventeur: **YANG, Yeong-Show**
**F-60260 Lamorlaye (FR)**

(74) Mandataire: **Jolly, Jean-Pierre et al**
**Cabinet Jolly**
**54, rue de Clichy**
**75009 Paris (FR)**

(56) Documents cités:
**EP-A- 0 115 072**
**EP-A- 0 143 396**
**EP-A- 0 273 243**
**WO-A-89/06252**
**US-A- 4 758 604**
**US-A- 4 880 872**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 648 236 B1

## Description

La présente invention concerne de nouveaux matériaux de haut module résistants à la chaleur, des compositions utilisées pour leur fabrication ainsi que les pièces de produits finis pouvant être obtenues à partir de ces matériaux. Le moulage par injection-réaction est un procédé de polymérisation rapide communément utilisé pour produire des polyuréthanes et des polyurées ayant des propriétés élastomériques à rigides. Cette technologie est utilisée dans la production de pièces automobiles telles que des pare-chocs. Dans ce procédé, deux flux hautement réactifs de composés chimiques sont mélangés ensemble sous haute pression, par exemple 80 à 200 bars environ, dans une chambre de mélange de petite dimension où les flux sont injectés directement l'un dans l'autre. Le matériau mélangé coule immédiatement dans un moule où la réaction chimique se poursuit et où la pièce moulée est réticulée. L'un des flux contient un polyisocyanate tandis que l'autre flux contient un polymère de haut poids moléculaire réactif avec l'isocyanate et un extendeur de chaîne.

Des polymères de haut module obtenus par le procédé de moulage par injection-réaction sont susceptibles de remplacer des panneaux d'automobile en acier à condition d'être capables de supporter les opérations de finition en ligne conduites à haute température. On connait par le brevet US-A-4 880 872 un matériau composite obtenu par un tel procédé à partir d'un premier mélange de polyisocyanate aromatique et d'un agent de réticulation et d'un second mélange comprenant:

(a) au moins 5 % en poids d'un composant éthyléniquement insaturé contenant au moins un monomère éthyléniquement insaturé tel que le styrène et au moins un polymère éthyléniquement insaturé tel qu'un polyester :
(b) de 30 à 75 % en poids d'une polyamine polyoxyalkylène de poids moléculaire compris entre 190 et 3 000, et
(c) de 5 à 40 % en poids d'un extendeur de chaîne choisi parmi les diamines aliphatiques $C_1$ - $C_{18}$, cycloaliphatiques $C_6$ - $C_{16}$ et aroma-tiques ayantau moins un substituant alkyle en position ortho de chaque groupe amine.

Un tel matériau possède un module en flexion supérieur à 700 MPa et pouvant atteindre jusqu'à 1 400 MPa et une résistance élevée à la chaleur, selon la méthode particulière de mesure décrite dans ce brevet.

En fait le matériau composite décrit par ce document souffre de plusieurs inconvénients: d'une part le module en flexion obtenu est très inférieur à celui que l'on peut obtenir pour un matériau similaire ne contenant pas de polyamine polyoxyalkylène, comme on le verra dans l'exemple comparatif ci-après. D'autre part lorsque la résistance à la chaleur de ce matériau est déterminée non pas par la méthode particulière à ce brevet mais par la mesure plus conventionnelle de la température de distorsion à la chaleur, on s'aperçoit que celle-ci ne dépasse pas 50 C° environ, ce qui est très insuffisant pour beaucoup d'applications du produit.

Un problème technique à résoudre par la présente invention consiste donc à définir un matériau susceptible d'être obtenu notamment par le procédé de moulage par injection-réaction et qui combine à la fois un module en flexion élevé, une température de distorsion à la chaleur élevée et une résistance au choc élevée, compromis qui n'est atteint ni par l'enseignement du brevet US-A-4 880 872 ni par les connaissances antérieures.

D'autre part le brevet FR-A-2 667 602 décrit une composition à mouler à base de polyester-polyuréthane, caractérisée en ce qu'elle comporte une première phase molle de polyurée au sein d'une seconde phase plus rigide de polyester-polyuréthane, formée par la réaction :

- d'un composant A comprenant un composé isocyanate polyfonctionnel et un catalyseur de polymérisation radicalaire ; et
- d'un composant B comprenant un mélange (i) d'une solution de monomère à insaturation éthylénique dans laquelle sont dissous environ 40-90 % en poids d'un polyester-polyol insaturé, essentiellement exempt d'eau, comportant au moins un groupement alcène dicarboxylique et ayant un indice d'acide inférieur à 5, et (ii) d'un composé azoté polyfonctionnel comportant au moins un atome d'hydrogène actif sur chacun d'au moins deux atomes d'azote dans chaque molécule, qui, une fois qu'il a réagi avec le composant A, a une masse moléculaire suffisante pour former la première phase molle de polyurée ;

dans laquelle le rapport des groupes NCO actifs de l'isocyanate aux groupes NH du composé azoté est compris entre environ 3 : 1 et environ 100 : 1, le rapport des groupes NCO actifs aux groupes OH actifs dans le polyester-polyol est compris entre environ 0,5 : 1 et environ 6 : 1, de telle sorte que l'indice stoechiométrique NCO: (NH + OH) soit compris entre environ 0,5 et environ 2,0.

La demande de brevet européen n° 143 396 concerne des suspensions de cristallites, qui contiennent

a) 3 à 70 % en poids d'un polyester à insaturation éthylénique, cristallin, préparé par la polycondensation de l'acide fumarique et de l'éthylène-glycol dans le rapport molaire de 1:1,2 à 2 où jusqu'à 18 % molaires de l'acide fumarique peuvent être remplacés par des acides carboxyliques aliphatiques, cycloaliphatiques et/ou aromatiques et jusqu'à

20 % molaires de l'éthylène-glycol peuvent être remplacés par d'autres alcools, avec un facteur de poids moléculaire par double laison de 154,4 à 408, à titre de phase dispersée et
b) 30 à 97 % en poids d'un composé polyhydroxylé possédant une fonctionnalité de 2 à 8, un indice d'hydroxyle de 20 à 800 et un point de fusion inférieur à 30°C, à titre de phase cohérente, où les pourcentages pondéraux se rapportent au poids global des composants (a) et (b).

Ces suspensions peuvent contenir de 0,1 à 7 %, d'une amine primaire et/ou secondaire aliphatique, cycloaliphatique et/ou araliphatique, d'une dialkylène triamine et/ou d'une alcanol-amine, réagissant avec le polyester insaturé par une réaction analogue à la réaction de Michael. Sont considérées comme avantageuses dans ce document, les amines aliphatiques répondant à la formule

$$H_2N\text{-}(CR^1R^2)_n\text{-}NR^3\text{-}CR^1R^2)_m\text{ - }X$$

dans laquelle

| | |
|---|---|
| $R^1$, $R^2$, $R^3$ | représentent des radicaux alkyle identiques ou différents, comportant de 1 à 4 atomes de carbone et/ou des atomes d'hydrogène. |
| X | représente un radical $NH_2$ ou OH |
| n | représente un nombre entier dont la valeur varie de 2 à 12 et |
| m | représente un nombre entier égal à 2 ou à 3. |

Pour résoudre les problèmes évoqués ci-dessus, la présente invention propose un matériau composite obtenu à partir d'un premier mélange à base de polyisocyanate, d'un second mélange comprenant au moins un monomère éthyléniquement insaturé, au moins une polyamine polyoxyalkylène et un polymère éthyléniquement insaturé, et d'un catalyseur de réticulation, caractérisé en ce que:

- le premier mélange comprend au moins un polyisocyanate et au moins un catalyseur de réaction des fonctions isocyanates avec le polymère éthyléniquement insaturé du second mélange, et en ce que
- le second mélange comprend, pour 100 parties en poids :
  . de 25 à 50 parties en poids environ d'au moins un monomère éthyléniquement insaturé,
  . de 50 à 75 parties en poids environ d'une résine polyester insaturée aminée qui est le produit de la réaction entre (a) un prépolymère polyester polyol insaturé et (b) au moins une amine polyoxyalkylène, le rapport en poids (a) / (b) étant au moins égal à 0,8 environ, et
  . jusqu'à 4 parties en poids environ d'au moins un catalyseur de réticulation.

Facultativement le second mélange peut en outre comprendre au moins l'un des constituants suivants:

- au moins un accélérateur de réticulation,
- au moins une charge pulvérulente,
- au moins une charge renforçante fibreuse.

Facultativement le premier mélange peut en outre comprendre au moins un monomère éthyléniquement insaturé, identique à ou différent de celui présent dans le second mélange mais de préférence miscible avec celui-ci.

Le matériau composite selon l'invention est de structure différente de la composition à mouler du brevet FR-A-2.667.602 et contrairement à cette dernière, peut être moulé avec des temps de moulage très courts, habituellement de dépassant pas 5 minutes.

En général par monomère éthyléniquement insaturé au sens de la présente invention on entend un composé choisi parmi le styrène, le vinyltoluène, le divinylbenzène, les esters de l'acide acrylique et de l'acide méthacrylique, le phtalate de diallyle, le maléate de diallyle, le fumarate de diallyle, le cyanurate de triallyle, l'acétate, le crotonate et le propionate de vinyle, le divinylether, les diènes conjugués tels que le butadiène-1,3, l'isoprène, le 1,3-pentadiène, le 1,4-pentadiène, le 1,4-hexadiène, le 1,5-hexadiène, le 1-9-décadiène, le 5-méthylène-2-norbornène, le 5-vinyl-2-norbornène, les 2-alkyl-2,5-norbornadiènes, le 5-éthylidène-2-nor-bornène, le 5-(2-propényl)-2-norbornène, le 5-(5-hexényl)-2-norbornène, le 1,5-cyclooctadiène, le bicyclo [2,2,2] octa-2,5-diène, le cyclopentadiène, le 4,7,8,9-tétra-hydroindène et l'isopropylidène terra-hydroindène, et les nitriles insaturés tels que l'acrylonitrile et le mé-thacrylonitrile. Les esters de l'acide acrylique et de l'acide méthacrylique utilisables sont par exemple les (méth)acrylates d'alkyle dont le groupe alkyle a de 1 à 8 atomes de carbone environ ainsi que les (meth)acrylates de polyol comme les diacrylates et

diméthacrylates de l'éthylèneglycol, du propylèneglycol, du 1,3-butanediol, du 1,4-butanediol, du 1,6-hexane-diol, du neopentyl-glycol, du 1,4-cyclo-hexane-diol, du 1,4-cyclohexane-dimé-thanol, du 2,2,4-triméthyl-1,3-pentanediol, du 2-éthyl-2-méthyl-1,3-propanediol, du 2,2,-diéthyl-1,3-propanediol, du diéthylèneglycol, du dipropylèneglycol, du triéthylène-glyeol, du tripropylèneglyeol, du terra-éthylèneglycol, du tétrapropylèneglycol, du triméthyloléthane, du triméthylolpropane, du glycérol, du pentaérythritol, les triacrylates et triméthacrylates du triméthyloléthane, du triméthylolpropane, du glycérol du pentaérythritol, les tétraacrylates et tétraméthacrylates du penta-érythritol, les di(méth)acrylates à hexa(méth)acrylates du dipenta-érythritol, les poly(méth)acrylates de polyols mono- ou polyéthoxylés ou mono- ou polypropoxylés tels que le triacrylate et le triméthacrylate du triméthylolpropane triéthoxylé, du triméthylolpropane tripropoxylé ; le triacrylate et le triméthacrylate du glycérol tripropoxylé ; le triacrylate, le triméthacrylate, le tétraacrylate et le tétraméthacrylate du pentaérythritol tétraéthoxylé,

Les prépolymères polyesters polyols insaturés (a) sont bien connus et sont préparés par réaction d'acides polycarboxyliques ou leurs anhydrides avec des alcools polyhydriques ou oxydes d'alkylène. Ils sont principalement linéaires et possèdent un poids moléculaire généralement compris entre 400 et 4 000 environ. Ils peuvent également posséder des chaines latérales lorsqu'on emploie des polyols ou des acides polycarboxyliques ayant plus de deux groupes fonctionnels. On préfére généralement les préparer à partir d'acides dicarboxyliques à insaturation a, b-éthylénique tels que maléique, fumarique, citraconique, métaconique, itaconique, tétraconique ou similaires ou, lorsqu'ils existent, à partir des anhydrides correspondants et le cas échéant, à partir d'acides saturés tels que ortho-phtalique, isophtalique, téréphtalique, ténabromophtalique, tétrachlorophtalique, adipique, sébacique, glutarique, pimélique, succinique et méthylsuccinique ou leurs anhydrides.

Lorsque les prépolymères (a) sont préparés à partir d'anhydride maléique, il est avantageux d'effectuer leur préparation en présence de morpholine afin d'augmenter le taux d'isomérisation des fonctions maléates en fonctions fumarates. La quantité de morpholine utilisée dans ce cas peut atteindre jusqu'à 1 % en poids, et est de préférence comprise entre 0,1 % et 0,5 % en poids du prépolymère polyester (a).

Parmi les alcools polyhydriques utilisés pour la préparation de ces prépolymères (a) on préfère généralement les diols aliphatiques saturés tels que l'éthylène glycol, le propylène glycol, le butylène glycol, le diéthylène glycol, le dipropylène glycol le triéthylène glycol, le tétraéthylène glycol, le butanediol, le pentanediol, l'hexanediol et le néopentylglycol. Le bisphénol A et ses dérivés alcoxylés, ainsi que d'autres polyols aromatiques peuvent également être utilisés. Les prépolymères polyesters (a) peuvent contenir des groupes carboxyliques ou hydroxyles terminaux ou bien être terminés par des groupes ester vinylique par condensation additionnelle des résines décrites ci-dessus avec des composés insaturés tels que les (akyl) acrylates époxydés comme l'acrylate et le méthacrylate de glycidyle, les (alkyl) acrylates hydroxylés, le monoacétate de vinyle et les maléimides N-substituées.

Par (alkyl) acrylate hydroxylé on entend ici un composé de formule générale :

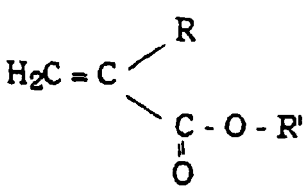

dans laquelle R est choisi parmi l'atome d'hydrogène et les radicaux alkyles ayant de préférence 1 à 4 atomes de carbone, et R' est un radical hydrocarboné, de préférence un radical alkyle, porteur d'au moins une fonction hydroxyle, située de préférence en extrémité de chaine. Comme exemples de tels composés, on peut citer notamment les acrylates, méthacrylates et éthylacrylates d'hydroxyalkyle comme les (méth)acrylates de 2-hydroxyéthyle et d'hydroxypropyle, les esters acryliques ou méthacryliques partiels de composés di- ou polyhydroxylés comme le mono(méth)acrylate d'éthylène glycol de propylène glycol-1,2 ou 1,3, de butylène glycol-1,4, d'hexaméthylèneglycol 1,6, de diéthylène glycol de triéthylène glycol de dipropylène glycol, le mono(méth)acrylate de glycérol, le mono(méth)acrylate de pentaérythritol.

Comme exemples de maléimide N- substituée on peut citer notamment la N-éthylmaléimide, la N-isopropylmaléimide, la N-n-butylinaléimide, la N-isobutylmaléimide, la N-terbutylmaléimide, la N-n-octylmaléimide, la N-cyclohexylmaléimide, la N-benzylmaléimide et la N-phénylmaléimide.

La préparation du prépolymère (a) peut être effectuée en présence d'une quantité efficace d'au moins un inhibiteur de réticulation. Comme exemples d'inhibiteurs de réticulation utilisables, on peut citer notamment la phénotiazine, l'éther méthylique de l'hydroquinone, la N,N-diéthylhydroxyamine, le nitrobenzène, le di-tertiobutylcatéchol, l'hyrdroquinone, le p-anilinophénol, le phosphite de di -(2-éthylhexyl) -octylphényl, le 2,5-ditertiobutyl-4-hydroxytoluéne, le bleu de méthylène et leurs mélanges en toutes proportions. Une quantité efficace d'inhibiteur de réticulation est généralement comprise entre 0,01 % et 0,2 % environ en poids de prépolymère (a).

Les prépolymères polyesters polyols (a) utilisables dans la présente invention possèdent un indice d'alcool compris entre 100 et 450 environ de préférence entre 150 et 350 environ, et un indice d'acide ne dépassant pas 10 environ de préférence ne dépassant pas 5 environ. Leur teneur en eau ne doit pas être supérieure à 3 000 ppm environ, de préférence pas supérieure à 1 000 ppm environ

Parmi les amines polyoxyalkylènes (b) on peut citer tout d'abord des polyamines bien connus notamment par les brevets US-A- 4 296 020 et US-A- 3 666 788. Elles possèdent au moins deux groupes réactifs avec les fonctions isocyanates et un poids moléculaire compris entre 200 et 6 000 environ Comme exemples on peut citer les composés de formules :

(c) $H_2N\text{-}CHX\text{-}CH_2\text{-}[OCH_2\text{-}CHX]_n\text{-}NH_2$ ;

(d) $H_2N\text{-}CHX\text{-}CH_2\text{-}[OCH_2\text{-}CHY]_a\text{-}[OCH_2\text{-}CH_2]_b\text{-}[OCH_2\text{-}CHY]_c\text{-}NH_2$;

(e) $H_2N\text{-}CO\text{-}NH\text{-}CHX\text{-}CH_2\text{-}[OCH_2\text{-}CHX]_n\text{-}NH\text{-}CO\text{-}NH_2$ ,

et

f)

$$\begin{array}{ll} & [OCH_2 - CHX]_x - NH_2 \\ A & [OCH_2 - CHX]_y - NH_2 \\ & [OCH_2 - CHX]_z - NH_2 \end{array}$$

dans lesquelles X est choisi parmi l'atome d'hydrogène et les groupes alkyles possédant de 1 à 18 atomes de carbone, A et Y sont choisis parmi les groupes alkyles possédant de 1 à 10 atomes de carbone, n est un nombre compris entre 2 et 70, b est un nombre compris entre 8 et 90, a et c sont des nombres tels que leur somme soit comprise entre 1 et 4, x, y et z sont des nombres compris entre 2 et 40.

Des amines polyoxyalkylènes (b) utilisables dans la présente invention peuvent être aussi des monoamines possédant un seul groupe réactif avec les fonctions isocyanates et un poids moléculaire compris entre 80 et 2100 environ A titre d'exemple on peut citer notamment les composés de formule

(g) $R\text{-}[OCH_2\text{-}CHR']_p\text{-}[OCH_2\text{-}CH(CH_3)]_q\text{-}CH_2\text{-}CH(CH_3)\text{-}NH_2$,

dans laquelle R est choisi parmi l'atome d'hydrogène et les groupes alkyles possédant de 1 à 10 atomes de carbone, R' est un groupe alkyle possédant de 1 à 10 atomes de carbone, p et q sont des nombres compris entre 0 et 40, et la somme p + q est différente de 0.

Le polyisocyanate utilisé dans la présente invention peut être bifonctionnel, trifonctionnel et jusqu'à hexafonctionnel. Il peut être aliphatique, cycloaliphatique et/ou aromatique. Comme exemples on peut citer notamment le 4,4'-diphénylméthane diisocyanate, le 2,4- et le 2,6-toluènediisocyanate, l'isophorone diisocyanate, le tétraméthylène diisocyanate, le pentaméthylène diisocyanate, l'hexaméthylène diisocyanate, le 4,4'-dicyclohexylméthane diisocyanate et le polyméthylène polyphénylisocyanate. Le polyisocyanate peut aussi, dans la présente invention, être utilisé sous forme de prépolymères du type polyurée ou polyuréthane de faible poids moléculaire, c'est-à-dire en faisant réagir l'un des polyisocyanates désignés ci-dessus avec une polyamine ou un polyol de faible poids moléculaire. Dans ce dernier cas on préfère utiliser un alkylène glycol tel que le dipropylène glycol, le tripropylène glycol, le diéthylène glycol, le triéthylène glycol, le tétraéthylèneglycol, le néopentylglycol, le 1,2- et le 1,3-butylène glycols. Dans la présente invention, le polyisocyanate peut encore être utilisé sous la forme d'urétoninine en chauffant l'un des polyisocyanates désignés ci-dessus à température élevée en présence d'un catalyseur phosphoré de manière à former un polycarbodiimide puis en faisant réagir ce dernier avec un autre groupe isocyanate, par exemple comme décrit dans le brevet US-A- 4 014 935.

Le catalyseur de réticulation présent dans le second mélange est de préférence un peroxyde organique tel que le peroxyde de benzoyle, le 2,5-diméthyl-2,5-bis (2-éthylhexolperoxy) hexane ou le peroxyde de méthyléthylcétone, un peroxydicarbonate, un peroxyester tel que le peroxybenzoate de tertiobutyle, le peroxyoctoate de tertiobutyle, le peroxyoctoate de tertioamyle ou le 2,5-diperoxyoctoate, ou encore le peroxyde de 2,4-pentanedione.

Comme accélérateurs de réticulation qui peuvent être utilisés en combinaison avec le catalyseur, on peut citer notamment des solutions de sels alcalins ou alcalino-terreux de métal de transition tel que vanadium, chrome, manganèse, fer, cobalt, nickel, cuivre, zinc, molydène et plomb, ou encore des amines telles que la diméthylaniline ou la N,N-diméthylparatoluidine.

Comme catalyseur de réaction des fonctions isocyanates avec la résine polyester insaturée aminée on peut citer :

(a) des amines tertiaires telles que le bis (diméthylaminoéthyl) éther, le triméthylamine, la triéthylamine, la N-méthytmorpholine, la N-éthylmorpholine, la N,N-diméthylbenzylamine, la N,N-diméthyl-éthanolamine, la N,N,N',N'-tétraméthyl-1,3-butanediamine, la triéthyl-anolamine, le 1,4-diazabicyclo [2.2.2] octane et l'oxyde de pyridine.
(b) des phosphines tertiaires telles que les trialkylphosphines et les dialkylbenzylphosphines,
(c) des bases fortes telles que les hydroxyies, alcoolates et phénolates de métaux alcalins et alcalino-terreux,
(d) des sels métalliques d'acides forts tels que les chlorures ferrique, stannique, stanneux et de bismuth, le trichlorure d'antimoine et le nitrate de bismuth,
(e) des chélates tels que ceux pouvant être obtenus à partir d'acétylacétone, de benzoylacétone, de trifluoroacétylacétone, d'acétoacétate d'éthyle, de salicylaldéhyde, de cyclopentanone-2-oerboxylate, d'acétylacétoimine, de bis-acétylacétonealkylènediimines, de salicylaldéhydeimine et à partir de métaux tels que le beryllium, le magnésium, le zinc, le cadmium, le plomb, le titane, le zirconium, l'étain, l'arsenic, le bismuth, le chrome, le molybdène, le manganèse, le fer, le cobalt et le nickel,
(f) les alcolates et phénolates de métaux tels que $Ti(OR)_4$, $Sn(OR)_4$, $Sn(OR)_2$ et $Al(OR)_3$ dans lesquels R est un groupe alkyle ou aryle,
(g) des sels d'acides organiques et des métaux tels que les alcalins et alcalino-terreux, l'aluminium, l'étain, le plomb, la manganèse, le cobalt le nickel et le cuivre, par exemple l'acétate de sodium, la laurate de potassium, l'hexanoate de calcium, les acétate, octoate et oléate stanneux, l'octoate de plomb, les naphténates de manganèse et de cobalt et
(h) les métaux carbonyles du fer et du cobalt et les dérivés organométalliques de l'étain tétravalent, de l'arsenic trivalent et pentavalent, de l'antimoine et du bismuth ; parmi ces dérivés on préfère plus particulièrement les sels de dialkylétain d'acides carboxyliques tels que le diacétate de dibutylétain, le dilaurate de dibutylétain, le maléate de dibutylétain, le diacétate de dilaurylétain, le diacétate de dioctylétain, le bis (4-méthylaminobenzoate) de dibutylétain, le bis (6-méthylaminocaproate) de dibutylétain, les hydroxydes de triakylétain, les oxydes de dialkylétain, les dialcoxydes de dialkylétain et les dichlorures de dialkylétain.

Ce catalyseur est généralement utilisé à raison de 0,01 à 2 % environ en poids du polyisocyanate présent dans le premier mélange.

Pour la formation de la résine polyester insaturée aminée présente dans le second mélange, le prépolymère (a) et l'amine polyoxyalkylène (b) sont de préférence utilisés dans un rapport en poids (a)/(b) ne dépassant pas 50 environ.

Pour atteindre, conformément aux objectifs de la présente invention. les performances attendues du matériau composite sont obtenues en mettant en présence le premier mélange et le second mélange en proportions telles que le rapport molaire des fonctions isocyanates aux fonctions hydroxyles soit compris entre 0,8 et 1,2 environ, et de préférence entre 0,95 et 1,05. A l'issue de leur mise en présence, les premier et second mélanges forment par réaction entre les fonctions isocyanates et les fonctions hydroxyle de la résine polyester insaturée aminée, un nouveau polymère unique et non pas, comme dans l'enseignement du brevet US-A-4 880 872, un mélange de deux polymères substantiellement indépendants, le premier étant un copolymère vinylique et le second une polyurée.

Les charges pulvérulentes qui peuvent être incorporées dans le second mélange sont notamment le carbonate de calcium, l'hydrate d'alumine, le kaolin, le talc, en proportion allant jusqu'à 70 % en poids environ par rapport au second mélange ou bien jusqu'à 50 % environ en poids par rapport au matériau composite.

Les charges renforçantes fibreuses qui peuvent être incorporées dans le second mélange sont notamment des fibres de verre, soit sous forme de fibres broyées (c'est-à-dire de fibres courtes, de longueur au plus égale à 15 mm environ) à raison de jusqu'à 35 % environ en poids par rapport au second mélange ou bien jusqu'à 25 % environ en poids du matériau composite, soit sous forme de mat de verre (c'est-à-dire de fibres longues, de longueur au moins égale à 25 mm environ) à raison de jusqu'à 70 % environ en poids du matériau composite.

Pour obtenir le matériau composite selon l'invention on met le premier mélange en présence du second mélange, à une température comprise de préférence entre 15°C et 50 °C environ. puis on porte le mélange résultant à une température comprise de préférence entre 30 et 150 °C environ et pendant une durée suffisante de manière à provoquer la réticulation par le monomère éthyléniquement insaturé. Une durée suffisante pour l'obtention du matériau composite selon l'invention est généralement comprise entre 30 secondes et 6 minutes environ, de préférence entre 1 et 4 minutes, selon la température choisie. A l'issue de cette étape, le matériau réticulé peut en outre être soumis à une phase de post-réticulation à une température de préférence comprise entre 100 et 180 °C environ et pendant une durée de préférence comprise entre 10 et 120 minutes environ.

L'obtention du matériau composite selon l'invention peut avoir lieu dans un moule soit par la technique de moulage par injection-réaction décrite précédemment soit par la technique de moulage par transfert de résine, Elle peut également avoir lieu selon les techniques suivantes:

- coulée (préparation d'un béton de résine).
- procédé de contact (à l'aide d'un pinceau ou d'un rouleau).
- projection simultanée à l'aide d'un pistolet équipé le cas échéant d'un coupeur de verre.
- enroulement filamentaire.

La présente invention a également pour objet des articles moulés obtenus par la préparation du matériau composite dans un moule. Ces articles se caractérisent par une température de distorsion à la chaleur au moins égale à 65 °C, et de préférence au moins égale à 80°C, par un module en flexion au moins égal à 2000 MPa et par une résistance au choc Charpy non entaillé au moins égal à 45 $KJ/m^2$. De préférence lorsque leur température de distorsion à la chaleur est comprise entre 65° et 80°C, alors leur résistance au choc Charpy non entaillé est au moins égale à 70 $KJ/m^2$.

Un autre objet de la présente invention consiste en une composition pour la fabrication de matériaux composites et d'articles moulés tels que décrits précédemment comprenant pour 100 parties en poids :

. de 25 à 50 parties en poids environ d'au moins un monomère éthyléniquement insaturé,
. de 50 à 75 parties en poids environ d'une résine polyester insaturée aminée qui est le produit de la réaction entre (a) un prépolymère polyester polyol insaturé et (b) une amine polyoxyalkylène, le rapport en poids (a)/(b) étant au moins égal à 0,8 environ, et
. jusqu'à 4 parties en poids environ d'au moins un catalyseur de réticulation,

Enfin un dernier objet de la présente invention consiste, à titre de produit intermédiaire dans l'obtention des compositions, matériaux composites et articles moulés décrits précédemment, en une résine polyester insaturée aminée obtenue par réaction entre (a) un prépolymère polyester polyol insaturé et (b) une amine polyoxyalkylène, le rapport en poids (a) / (b) étant au moins égal à 0,8 environ Le monomère insaturé, le prépolymère polyester polyol insaturé, l'amine polyoxyalkylène et le catalyseur de réticulation utilisés dans cette composition et/ou dans ce produit intermédiaire ont déjà été décrits en détail ci-dessus.

Facultativement ladite composition peut en outre comprendre au moins l'un des constituants suivants:

- au moins un accélérateur de réticulation
- au moins une charge pulvérulente, et
- au moins une charge renforçante fibreuse,

tels que décrits en détail ci-dessus.

Les exemples ci-après sont fournis à titre illustratif et non limitatif de la présente invention.

EXEMPLE 1 (COMPARATIF)

On introduit dans un réacteur et on mélange jusqu'à homogénéité :

- 31,39 parties en poids d'une triamine de polypropylène oxyde de poids moléculaire 3000 commercialisée par TEXACO sous la dénomination JEFFAMINE T-3000,
- 9,26 parties en poids de 1,3,5-triéthyl-2,6 diaminobenzène,
- 17,05 parties en poids de styrène, et
- 14,48 parties en poids d'une résine polyester maléate de polypropylène glycol.

Le mélange résultant est alors transféré au réservoir de composant B d'une machine de moulage par injection-réaction conforme au brevet US-A-4 189 070, où sa température est maintenue à 60°C.

De manière similaire on mélange dans un réacteur 26,84 parties en poids d'un prépolymère liquide de diisocyanate de 4,4'-diphénylméthane modifié par un glycol commercialisé par la société RUBICON CHEMICAL sous la marque RUBINATE LF-179, et 0,99 partie en poids de tertiobutylperoxy-2-hexylhexanoate commercialisé par la société AKZO sous la marque TRIGONOX 21 S comme agent de réticulation puis le mélange résultant est transféré au réservoir de composant A de la machine de moulage déjà citée, où sa température est maintenue à 40°C.

Les composants A et B sont alors injectés sous une pression de 100 bars dans un moule en acier de dimensions 12 x 22 x 0,3 cm préchauffé à 100°C. La pièce moulée est alors retirée du moule au bout de 5 minutes puis soumise à une étape de post-réticulation au four pendant 1 heure à 140°C. Après refroidissement jusqu'à la température ambiante, les propriétés suivantes sont mesurées sur la pièce moulée :

module en flexion: 960 MPa
contrainte à la rupture en flexion : 18 MPa
température de distorsion à la chaleur: 48°C
résistance au choc Charpy non entaillé : non mesurable (échantillon trop souple)

EXEMPLE 2

On charge dans un réacteur 225 parties en poids d'anhydride maléique, 145 parties en poids de néopentylglycol, 105 parties en poids de propylène glycol, 195 parties en poids de diéthylène glycol, 3,3 parties en poids de morpholine et 0,2 partie en poids d'hydroquinone. Le réacteur maintenu sous léger courant d'azote, est chauffe à 75°C pour obtenir la fusion de tous les composants solides. On met ensuite l'agitateur en action, puis le réacteur est chauffé jusqu'à 220°C et maintenu à cette température pendant 7 heures. La fin de la réaction est accélérée par la mise en action d'une pompe à vide, puis la réaction est arrêtée lorque le nombre d'acide de la résine descend en dessous de 5. L'analyse du produit final montre que 97 % des fonctions maléate ont été isomérisés en fonctions fumarate

EXEMPLES 3 à 15

La résine de polyester insaturée préparée conformément à l'exemple 2 est refroidie depuis sa température de préparation (220°C) jusqu'à la température $T_1$ indiquée dans le tableau I ci-après, puis au réacteur on ajoute $x_1$ parties en poids de polyoxyalkylène polyamine pour 100 parties de résine polyester et on laisse la réaction de Michael se poursuivre pendant la durée t (exprimée en minutes) indiquée dans le tableau I ci-après. A l'issue de la réaction de Michael, l'analyse de la résine polyester insaturée aminée montre une isomérisation en résidus fumarates au moins égale à 99 %. Les polyoxyalkylène polyamines utilisées sont commercialisées par la société TEXACO sous la marque JEFFAMINE et portent les références suivantes :

- D-400 pour les exemples 3 à 5,
- T-403 pour l'exemple 6,
- D-230 pour l'emple 7,
- BD-600 pour l'exemple 8,
- BD-605 pour l'exemple 9,
- D-2000 pour l'exemple 10,
- T-3000 pour les exemples 11 à 13,
- D-4000 pour l'exemple 14 et
- T-5000 pour l'exemple 15.

Tableau I

| Exemple | 3 | 4 | 5 | 6 | 7 | 8 | 9 |
|---|---|---|---|---|---|---|---|
| $x_1$ | 5,3 | 8,5 | 11,1 | 6,0 | 4,4 | 11,1 | 11,1 |
| $T_1$ | 120 | 120 | 180 | 120 | 120 | 120 | 120 |
| t | 30 | 30 | 20 | 30 | 30 | 30 | 30 |

Tableau I (suite)

| Exemple | 10 | 11 | 12 | 13 | 14 | 15 |
|---|---|---|---|---|---|---|
| x1 | 56,8 | 11,1 | 56,8 | 56,8 | 11,1 | 94,7 |
| T1 | 120 | 120 | 120 | 50 | 120 | 120 |
| t | 30 | 30 | 30 | 60 | 30 | 30 |

EXEMPLES 16 à 32

On prépare d'abord un premier mélange comprenant $Y_1$ parties en poids de diisocyanate de diphénylméthylène commercialisé par DOW CHEMICAL sous la référence M 143 et $Y_2$ parties en poids de peroxyde de benzoyle commercialisé par AKZO sous la marque LUCIDOL CH.50 On prépare d'autre part un second mélange comprenant $x_2$ parties en poids de résine insaturée obtenue conformément à l'un des exemples précédents (cet exemple est identifié dans le tableau II ci-après sur la ligne "résine ex.")., 100 - $x_2$ parties en poids de styrène, 0,4 parties en poids de poids de dilaurate de dibutylétain commercialisé par ALDRICH et W parties en poids de diméthylaniline. Les deux mélanges ainsi préparés sont alors introduits simultanément dans un même réacteur et mélangés rapidement à température ambiante. Le mélange obtenu est immédiatement transféré dans un moule carré à la température de 90°C (sauf pour l'exemple 19 : 60°C) où il est maintenu pendant 1 minute (sauf pour l'exemple 19 : 3 minutes), après quoi il est soumis à une étape de post-réticulation à 180°C pendant 15 minutes. Le tableau II ci-après indique pour chaque exemple, outre les valeurs de $Y_1$, $Y_2$, $x_2$ et W et la nature de la résine polyester insaturée aminée, les valeurs des propriétés suivantes mesurées sur le matériau moulé:

- module en traction MT, exprimé en MPa et déterminé selon la norme NFT 51-034.
- contrainte à la rupture en traction RR, exprimée en MPa et déterminée selon la norme NFT 51-034.
- élongation à la rupture AR, exprimée en % et déterminée selon la norme NFT 51-034.
- résistance au choc Charpy non-entaillé RC, exprimée en $kJ/m^2$ et déterminée selon la norme NFT 51-035.
- température de distorsion à la chaleur HDT, exprimée en degrés Celsius et déterminée selon la norme NFT ISO 75.

L'exemple 16 réalisé à partir d'une résine polyester insaturée non aminée, est donné à titre comparatif.

Tableau II

| Exemple | 16 | 17 | 18 | 19 | 20 | 21 | 22 | 23 |
|---|---|---|---|---|---|---|---|---|
| $Y_1$ | 53,7 | 64,2 | 62,5 | 62,5 | 62,5 | 53,7 | 60,8 | 63,7 |
| $Y_2$ | 1,0 | 1,4 | 1,2 | 1,2 | 0,6 | 0,6 | 1,2 | 1,4 |
| $x_2$ | 58 | 67,5 | 67,5 | 67,5 | 67,5 | 58 | 67,5 | 67,5 |
| W | 0,2 | 0,2 | 0,2 | 0,2 | 0 | 0 | 0,2 | 0,2 |
| résine ex. | 2 | 3 | 4 | 4 | 4 | 4 | 5 | 6 |
| MT | 3300 | 3000 | 3100 | 3100 | 3200 | 3300 | 3300 | 3100 |
| RR | 65 | 79 | 81 | 80 | 83 | 85 | 80 | 88 |
| AR | 3,3 | 5,2 | 7,1 | 6,5 | 5,5 | 2,5 | 5,4 | 7,9 |
| RC | 35 | 46 | 52 | 50 | 51 | 45 | 53 | 49 |
| HDT | 122 | 110 | 105 | 110 | 110 | 120 | 100 | 112 |

TABLEAU II (suite)

| Exemple | 24 | 25 | 26 | 27 | 28 | 29 | 30 | 31 | 32 |
|---|---|---|---|---|---|---|---|---|---|
| $Y_1$ | 64,7 | 60,8 | 60,8 | 60,8 | 43,1 | 43,1 | 60,8 | 31,5 | 43,1 |
| $Y_2$ | 1,4 | 1,2 | 1,2 | 1,2 | 1,0 | 1,0 | 1,2 | 0,9 | 1,0 |
| $x_2$ | 67,5 | 67,5 | 67,5 | 67,5 | 74,4 | 74,4 | 67,5 | 78,3 | 74,4 |
| W | 0,2 | 0,2 | 0,2 | 0,2 | 0,2 | 0,2 | 0,2 | 0,2 | 0,2 |
| résine ex. | 7 | 8 | 9 | 11 | 12 | 13 | 14 | 15 | 10 |
| MT | 3200 | 3000 | 3100 | 3100 | 2300 | 2600 | 2900 | n.d. | 2400 |
| RR | 79 | 75 | 79 | 84 | n.d. | n.d. | 79 | n.d. | n.d. |
| AR | 4,9 | 4,2 | 5,0 | 5,3 | 9,6 | 8,4 | 6,0 | 10,5 | 8,6 |
| RC | 45 | 48 | 47 | 47 | 54 | 63 | 55 | 100 | 54 |
| HDT | 105 | 112 | 110 | 109 | 91 | 88 | 111 | 75 | 92 |

n.d. = non déterminé

EXEMPLE 33

On prépare une autre résine polyester insaturée, selon le procédé de l'exemple 2 en chargeant dans le réacteur 294 parties en poids d'anhydride maléique, 296 parties en poids d'acide isophtalique, 312 parties en poids de néopentylglycol, 229 parties en poids de propylèneglycol, 424 parties en poids de diéthylèneglycol et 0,05 partie en poids d'hydroquinone. L'analyse du produit final montre que 77 % des fonctions maléates ont été isomérisées en fonctions

fumarate.

EXEMPLE 34

On prépare une autre résine polyester insaturée selon le procédé de l'exemple 33 mais en ajoutant dans le réacteur 3,3 parties en poids de morpholine dès le début de la réaction, L'analyse du produit final montre que 97 % des fonctions maléate ont été isomérisées en fonctions fumarate.

EXEMPLE 35 à 38

A partir des résines des exemples 33 et 34 on prépare des résines polyesters insaturées aminées en suivant le procédé des exemples 3 à 15. Les polyoxyalkylène polyamines utilisées sont:

- JEFFAMINE D-400 pour les exemples 35 à 37, et
- JEFFAMINE T-3000 pour l'exemple 38.

Pour chaque exemple $T_1$ = 120°C et t = 30 minutes.

Le tableau III ci-dessous indique la valeur de x1, pour chaque exemple, ainsi que la nature de la résine polyester de départ.

TABLEAU III

| Exemple | 35 | 36 | 37 | 38 |
|---|---|---|---|---|
| x1 | 8,5 | 8,5 | 2,6 | 11,1 |
| résine | ex. 33 | ex. 34 | ex. 34 | ex. 34 |

EXEMPLES 39 à 42

En suivant le procédé de l'exemple 16, on prépare des matériaux composites sur lesquels on mesure la résistance au choc de Charpy non-entaillé RC et la température de distorsion à la chaleur HDT comme précisé précédemment Le tableau IV ci-après indique pour chaque exemple, outre la valeur de $Y_1$ et la nature de la résine polyester insaturée aminée, les valeurs des propriétés mesurées.
Dans tous ces exemples, $Y_2$ = 1 ; $x_2$ = 61 ; Z = 0,4 et W = 0,2.

TABLEAU IV

| Exemple | $Y_1$ | résine ex. | RC | HDT |
|---|---|---|---|---|
| 39 | 50,2 | 35 | 83 | 85 |
| 40 | 50,2 | 36 | 85 | 85 |
| 41 | 53,1 | 37 | 71 | 90 |
| 42 | 50,2 | 38 | 70 | 90 |

En outre, pour le matériau de l'exemple 42, on a mesuré MT = 3100 MPa, RR = 80 MPa et AR = 7,4 %.

FXEMPLES 43

On prépare une autre résine polyester insaturée, selon le procédé de l'exemple 2, en chargeant dans le réacteur 348 parties en poids d'acide fumarique, 296 parties en poids d'acide isophtalique, 312 parties en poids de néopentylglycol, 229 parties en poids de propylèneglycol, 424 parties en poids de diéthylèneglycol et 0,05 partie d'hydroquinone.

EXEMPLES 44 à 47.

A partir de la résine de l'exemple 43 on prépare des résines polyesters insaturées aminées en suivant le procédé

des exemples 3 à 15. Les polyoxyalkylène polyamines utilisées sont:

- JEFFAMINE D-400 pour les exemples 44 et 45, et
- JEFFAMINE T-3000 pour les exemples 46 et 47.

Pour chaque exemple T1 = 180°C et t = 30 minutes.

Le tableau ci-après indique la valeur de $x_1$. En suivant le procédé de l'exemple 16, on prépare ensuite des matériaux composites sur lesquels on mesure la résistance au choc Charpy non-entaillé RC et la température de distorsion à la chaleur HDT comme précisé précédemment Le tableau V ci-après indique pour chaque exemple, outre les quantités $Y_1$ de polyisocyanate M 143 et $Y_2$ de TRIGONOX 21 S, les valeurs des propriétés mesurées. Dans tous ces exemples $x_2$ = 61, Z = 0,4 et W = 0. En outre pour le matériau de l'exemple 46 on a mesuré MT = 3100 MPa, RR = 81 MPa et AR = 7,5 %.

TABLEAU V

| Exemple | $x_1$ | $Y_1$ | $Y_2$ | RC | HDT |
|---|---|---|---|---|---|
| 44 | 8,5 | 51,4 | 1,0 | 82 | 85 |
| 45 | 11,1 | 50,2 | 1,0 | 86 | 83 |
| 46 | 11,1 | 50,2 | 1,0 | 68 | 90 |
| 47 | 56,8 | 35,6 | 0,7 | 100 | 70 |

**Revendications**

**1.** Matériau composite susceptible d'être obtenu à partir d'un premier mélange à base de polyisocyanate, d'un second mélange comprenant au moins un monomère éthyléniquement insaturé, au moins une polyamine polyoxyalkylène et un polymère éthyléniquement insaturé, et d'un catalyseur de réticulation, caractérisé en ce que :

- le premier mélange comprend au moins un polyisocyanate et au moins un catalyseur de réaction des fonctions isocyanates avec le polymère éthyléniquement insaturé du second mélange, et en ce que
- le second mélange comprend, pour 100 parties en poids :
  . de 25 à 50 parties en poids d'au moins un monomère éthyléniquement insaturé,
  . de 50 à 75 parties en poids d'une résine polyester insaturée aminée qui est le produit de la réaction entre (a) un prépolymère polyester polyol insaturé et (b) une amine polyoxyalkylène, le rapport en poids (a) / (b) étant au moins égal à 0,8, et
  . jusqu'à 4 parties en poids d'au moins un catalyseur de réticulation.

**2.** Matériau composite selon la revendication 1, caractérisé en ce que l'amine polyoxyalkylène est choisie parmi les monoamines ayant un poids moléculaire compris entre 80 et 2 100 et les polyamines ayant un poids moléculaire compris entre 200 et 6 000.

**3.** Matériau composite selon l'une des revendications 1 et 2, caractérisé en ce que l'amine polyoxyalkylène est choisie parmi les composés de formule

$$\text{(g)} \qquad R\text{-}[OCH_2CHR']_p\text{-}[OCH_2\text{-}CH(CH_3)]_q\text{-}CH_2\text{-}CH(CH_3)\text{-}NH_2,$$

dans laquelle R est choisi parmi l'atome d'hydrogène et les groupes alkyles possédant de 1 à 10 atomes de carbone, R' est un groupe alkyle possédant de 1 à 10 atomes de carbone, p et q sont des nombres compris entre 0 et 40, et la somme p + q est différente de 0.

**4.** Matériau composite selon l'une des revendications 1 et 2, caractérisé en ce que l'amine polyoxyalkylène est choisie parmi les composés de formule :

(c) $H_2N\text{-}CHX\text{-}CH_2\text{-}[OCH_2\text{-}CHX]_n\text{-}NH_2$ ;

(d) $H_2N\text{-}CHX\text{-}CH_2\text{-}[OCH_2\text{-}CHY]_a\text{-}[OCH_2\text{-}CH_2]_b\text{-}[OCH_2\text{-}CHY]_c\text{-}NH_2$ ;

(e) $H_2N\text{-}CO\text{-}NH\text{-}CHX\text{-}CH_2\text{-}[OCH_2\text{-}CHX]_n\text{-}NH\text{-}CO\text{-}NH_2$ ,

et

f)
$$A \begin{array}{l} [OCH_2 - CHX]_x - NH_2 \\ [OCH_2 - CHX]_y - NH_2 \\ [OCH_2 - CHX]_z - NH_2 \end{array}$$

dans lesquelles X est choisi parmi l'atome d'hydrogène et les groupes alkyles possédant de 1 à 18 atomes de carbone, A et Y sont choisis parmi les groupes alkyles possédant de 1 à 10 atomes de carbone, n est un nombre compris entre 2 et 70, b est un nombre compris entre 8 et 90, a et c sont des nombres tels que leur somme soit comprise entre 1 et 4, x, y et z sont des nombres compris entre 2 et 40.

**5.** Matériau composite selon l'une des revendications 1 à 4, caractérisé en ce que le second mélange comprend en outre au moins un accélérateur de réticulation.

**6.** Matériau composite selon l'une des revendications 1 à 5, caractérisé en ce que le second mélange comprend en outre au moins une charge pulvérulente.

**7.** Matériau composite selon l'une des revendications 1 à 6, caractérisé en ce que le second mélange comprend en outre au moins une charge renforçante fibreuse.

**8.** Matériau composite selon l'une des revendications 1 à 7, caractérisé en ce que le prépolymère (a) et l'amine polyoxyalkylène (b) sont utilisés dans un rapport en poids (a) / (b) ne dépassant pas 50.

**9.** Procédé d'obtention d'un matériau composite selon la revendication 1, caractérisé en ce qu'on met le premier mélange en présence du second mélange, puis on porte le mélange résultant à une température comprise entre 30 et 150 °C pendant une durée comprise entre 30 secondes et 6 minutes environ.

**10.** Procédé selon la revendication 9, caractérisé en ce qu'on soumet ensuite le matériau réticulé à une phase de post-réticulation.

**11.** Composition pour la fabrication de matériaux composites comprenant pour 100 parties en poids :

- de 25 à 50 parties en poids d'au moins un monomère éthyléniquement insaturé.
- de 50 à 75 parties en poids d'une résine polyester insaturée aminée qui est le produit de la réaction entre (a) un prépolymère polyester polyol insaturé et (b) une amine polyoxyalkylène, le rapport en poids (a)/(b) étant au moins égal à 0,8 %, et
- jusqu'à 4 parties en poids d'au moins un catalyseur de reticulation.

**12.** Résine polyester insaturée aminée obtenue par réaction entre (a) un prépolymère polyester polyol insaturé et (b) une amine polyoxyalkylène, le rapport en poids (a) / (b) étant au moins égal à 0,8.

**13.** Articles moulés obtenus par préparation d'un matériau composite selon la revendication 1 dans un moule, caractérisés par une température de distorsion à la chaleur au moins égale à 65°C, par un module en flexion au moins égal à 2000 MPa et par une résistance au choc Charpy non entaillé au moins égal à 45 $KJ/m^2$.

## Patentansprüche

**1.** Verbundwerkstoff erhältlich ausgehend von einer ersten Mischung auf Basis von Polyisocyanat, einer zweiten Mischung, die mindestens ein ethylenisch ungesättigtes Monomer, mindestens ein Polyoxyalkylenpolyamin und ein ethylenisch ungesättigtes Polymer enthält, und einem Vernetzungskatalysator, **dadurch gekennzeichnet,** daß:

- die erste Mischung mindestens ein Polyisocyanat und mindestens einen Katalysator der Reaktion der Isocyanatfunktionen mit dem ethylenisch ungesättigten Polymer der zweiten Mischung enthält, und daß
- die zweite Mischung pro 100 Gew.-Teile enthält:

  . 25 bis 50 Gew.-Teile mindestens eines ethylenisch ungesättigten Monomers,
  . 50 bis 75 Gew.-Teile eines ungesättigten aminhaltigen Polyesterharzes, das das Produkt der Reaktion zwischen (a) einem ungesättigten Polyolpolyester-Vorpolymer und (b) mindestens einem Polyoxyalkylenamin ist, wobei das Gewichtsverhältnis (a) / (b) mindestens 0,8 beträgt, und
  . bis zu 4 Gew.-Teile mindestens eines Vernetzungskatalysators.

**2.** Verbundwerkstoff nach Anspruch 1, **dadurch gekennzeichnet,** daß das Polyoxyalkylenamin aus Monoaminen mit einem Molekulargewicht zwischen 80 und 2100 und Polyaminen mit einem Molekulargewicht zwischen 200 und 6000 ausgewählt ist.

**3.** Verbundwerkstoff nach einem der Ansprüche 1 und 2, **dadurch gekenn**zeichnet. daß das Polyoxyalkylenamin aus Verbindungen der Formel ausgewählt wird

(g) $R\text{-}[OCH_2\text{-}CHR']_p\text{-}[OCH_2\text{-}CH(CH_3)]_q\text{-}CH_2\text{-}CH(CH_3)\text{-}NH_2$,

in der R aus Wasserstoffatomen und Alkylgruppen mit 1 bis 10 Kohlenstoffatomen ausgewählt ist, R' eine Alkylgruppe mit 1 bis 10 Kohlenstoffatomen darstellt, p und q Zahlen zwischen 0 und 40 darstellen. wobei die Summe p + q von 0 verschieden ist.

**4.** Verbundwerkstoff nach einem der Ansprüche 1 und 2, **dadurch gekennzeichnet,** daß das Polyoxyalkylenamin aus Verbindungen der Formeln ausgewählt ist:

(c) $H_2N\text{-}CHX\text{-}CH_2\text{-}[OCH_2\text{-}CHX]_n\text{-}NH_2$;

(d) $H_2N\text{-}CHX\text{-}CH_2\text{-}[OCH_2\text{-}CHY]_a\text{-}[OCH_2\text{-}CH_2]_b\text{-}[OCH_2\text{-}CHY]_c\text{-}NH_2$;

(e) $H_2N\text{-}CO\text{-}NH\text{-}CHX\text{-}CH_2\text{-}[OCH_2\text{-}CHX]_n\text{-}NH\text{-}CO\text{-}NH_2$

und

(f)
$$A\begin{cases}[OCH_2\text{-}CHX]_x\text{-}NH_2\\ [OCH_2\text{-}CHX]_y\text{-}NH_2\\ [OCH_2\text{-}CHX]_z\text{-}NH_2\end{cases}$$

worin X aus Wasserstoffatomen und Alkylgruppen mit 1 bis 18 Kohlenstoffatomen ausgewählt ist. A und Y aus Alkylgruppen mit 1 bis 10 Kohlenstoffatomen ausgewählt sind, n eine Zahl zwischen 2 und 70 darstellt, b eine Zahl zwischen 8 und 90 darstellt, a und c Zahlen sind, deren Summe zwischen 1 und 4 liegt, und x. y und z Zahlen zwischen 2 und 40 bedeuten.

**5.** Verbundwerkstoff nach einem der Ansprüche 1 bis 4, **dadurch gekennzeichnet,** daß die zweite Mischung zusätzlich mindestens einen Vernetzungsbeschleuniger enthält.

6. Verbundwerkstoff nach einem der Ansprüche 1 bis 5, **dadurch gekennzeichnet**, daß die zweite Mischung zusätzlich mindestens einen pulverförmigen Füllstoff enthält.

7. Verbundwerkstoff nach einem der Ansprüche 1 bis 6, dadurch gekennzeichnet, daß die zweite Mischung zusätzlich mindestens einen faserigen Verstärkungsfüllstoff enthält.

8. Verbundwerkstoff nach einem der Ansprüche 1 bis 6, dadurch gekennzeichnet, daß das Vorpolymer (a) und das Polyoxyalkylenamin (b) in einem Gewichtsverhältnis (a) / (b) von nicht mehr als 50 verwendet werden.

9. Verfahren zur Herstellung eines Verbundwerkstoffs nach Anspruch 1, **dadurch gekennzeichnet,** daß man die erste Mischung mit der zweiten Mischung vereinigt. dann die daraus sich ergebende Mischung während einer Dauer zwischen etwa 30 Sekunden und 6 Minuten auf eine Temperatur zwischen 30 und 150°C erhitzt.

10. Verfahren nach Anspruch 9, **dadurch gekennzeichnet,** daß man das vernetzte Material anschließend einer Phase der Nachvernetzung unterwirft.

11. Zusammensetzung für die Herstellung von Verbundwerkstoffen, die pro 100 Gew.-Teile:

   . 25 bis 50 Gew.-Teile mindestens eines ethylenisch ungesättigten Monomers,
   . 50 bis 75 Gew.-Teile eines ungesättigten aminhaltigen Polyesterharzes, welches das Produkt der Reaktion zwischen (a) einem ungesättigten Polyolpolyester-Vorpolymer und (b) einem Polyoxyalkylenamin mit einem Gewichtsverhältnis (a) / (b) von mindestens 0.8 % ist, und
   . bis zu 4 Gew.-Teile mindestens eines Vernetzungskatalysators

   umfaßt.

12. Ungesättigtes aminhaltiges Polyesterharz erhalten durch Reaktion zwischen (a) einem ungesättigten Polyolpolyester-Vorpolymer und (b) einem Polyoxyalkylenamin, wobei das Gewichtsverhältnis (a) / (b) mindestens 0,8 beträgt.

13. Formgegenstände erhalten durch Verarbeiten des Verbundwerkstoffs nach Anspruch 1 in einer Form, **gekennzeichnet durch** eine Hitzeverformungstemperatur von mindestens 65°C, einen Elastizitätsmodul von mindestens 2000 MPa und eine Charpy-Festigkeit bei nicht gekerbtem Prüfling von mindestens 45 $kJ/_{m}2_{.}$

## Claims

1. A composite material which may be prepared from a first mixture based on polyisocyanate, from a second mixture comprising at least one ethylenically unsaturated monomer, at least one polyoxyalkylene polyamine and one ethylenically unsaturated polymer, and from a crosslinking agent, characterised in that:

   - the first mixture comprises at least one polyisocyanate and at least one catalyst for the reaction between the isocyanate groups and the ethylenically unsaturated polymer of the second mixture, and in that:
   - the second mixture comprises, for every 100 parts by weight:

     - between 25 and 50 parts by weight of at least one ethylenically unsaturated monomer,
     - between 50 and 75 parts by weight of an aminated unsaturated polyester resin which is the product of the reaction between (a) an unsaturated polyol polyester pre-polymer and (b) a polyoxyalkylene amine, the weight ratio (a):(b) being at least equal to 0.8, and
     - up to 4 parts by weight of at least one crosslinking agent.

2. A composite material as claimed in claim 1, characterised in that the polyoxyalkylene amine is selected from monoamines having a molecular weight of between 80 and 2100 inclusive and polyamines having a molecular weight of between 200 and 6000 inclusive.

3. A composite material as claimed in one of claims 1 and 2, characterised in that the polyoxyalkylene amine is

selected from compounds of the formula

(g) $R\text{-}[OCH_2\text{-}CHR']_p\text{-}[OCH_2\text{-}CH(CH_3)]q\text{-}CH_2\text{-}CH(CH_3)\text{-}NH_2$,

in which R is selected from a hydrogen atom and alkyl groups with between 1 and 10 carbon atoms, R' is an alkyl group with between 1 and 10 carbon atoms, p and q are numbers between 0 and 40 inclusive, and the sum of p + q is other than 0.

**4.** A composite material as claimed in one of claims 1 and 2, characterised in that the polyoxyalkylene amine is selected from compounds of the formula:

(c) $H_2N\text{-}CHX\text{-}CH_2\text{-}[OCH_2\text{-}CHX]_n\text{-}NH_2$;

(d) $H_2N\text{-}CHX\text{-}CH_2\text{-}[OCH_2\text{-}CHY]_a\text{-}[OCH_2\text{-}CH_2]_b\text{-}[OCH_2\text{-}CHY]_c\text{-}NH_2$;

(e) $H_2N\text{-}CO\text{-}NH\text{-}CHX\text{-}CH_2\text{-}[OCH_2\text{-}CHX]_n\text{-}NH\text{-}CO\text{-}NH_2$,

and

(f)

$$A \begin{array}{l} [OCH_2\text{-}CHX]_x\text{-}NH_2 \\ [OCH_2\text{-}CHX]_y\text{-}NH_2 \\ [OCH_2\text{-}CHX]_z\text{-}NH_2 \end{array}$$

in which X is selected from a hydrogen atom and alkyl groups with between 1 and 18 carbon atoms, A and Y are selected from alkyl groups with between 1 and 10 carbon atoms, n is a number between 2 and 70 inclusive, b is a number between 8 and 90 inclusive, a and c are numbers such that their sum is between 1 and 4 inclusive, and x, y and z are numbers between 2 and 40 inclusive.

**5.** A composite material as claimed in one of claims 1 to 4, characterised in that the second mixture also comprises at least one crosslinking accelerator.

**6.** A composite material as claimed in one of claims 1 to 5, characterised in that the second mixture also comprises at least one powdered filler.

**7.** A composite material as claimed in one of claims 1 to 6, characterised in that the second mixture also comprises at least one fibrous reinforcing filler.

**8.** A composite material as claimed in one of claims 1 to 7, characterised in that the pre-polymer (a) and the polyoxyalkylene amine (b) are used in a weight ratio a:b not exceeding 50.

**9.** A process for the preparation of a composite material as claimed in claim 1, characterised in that the first mixture is brought into the presence of the second mixture, and the resulting mixture is then brought to a temperature of between 30 and 150°C inclusive for an inclusive period of between 30 seconds and 6 minutes approximately.

**10.** A process as claimed in claim 9, characterised in that the crosslinked material is then subjected to a post-crosslinking phase.

**11.** A composition for the manufacture of composite materials comprising, for every 100 parts by weight:

- between 25 and 50 parts by weight of at least one ethylenically unsaturated monomer,
- between 50 and 75 parts by weight of an aminated unsaturated polyester resin which is the product of the

reaction between (a) an unsaturated polyol polyester pre-polymer and (b) a polyoxyalkylene amine, the weight ratio (a):(b) being at least equal to 0.8%, and

- up to 4 parts by weight of at least one crosslinking agent.

**12.** An aminated unsaturated polyester resin prepared by reacting (a) an unsaturated polyol polyester pre-polymer and (b) a polyoxyalkylene amine, the weight ratio (a):(b) being at least equal to 0.8.

**13.** Moulded articles produced by the preparation of a composite material as claimed in claim 1 in a mould, characterised by a heat distortion temperature at least equal to 65°C, a flexural modulus at least equal to 2000 MPa and by an un-notched Charpy impact strength at least equal to 45 $KJ/m^2$.